# EUROPEAN PATENT APPLICATION

(11) **EP 4 549 769 A1**
(43) Date of publication of application: **07.05.2025**
(21) Application number: 23207871.7
(22) Date of filing: 06.11.2023
(51) Int. Cl.: F16D 55/226, F16D 55/228, F16D 65/095, F16D 65/097, F16D 65/52

(54) **BRAKE PAD KIT WITH SPRING ASSEMBLY, DISC BRAKE ASSEMBLY, AND VEHICLE**

(71) Applicant: VOLVO TRUCK CORPORATION, 405 08 Göteborg (SE)
(72) Inventor: VELMURUGAN, Arunkumar, 560093 TAMILNADU (IN)
(74) Representative: Kransell & Wennborg KB

(57) **Abstract**

A brake pad kit (13) comprising an elongated spring assembly (21) including a spring (25); a first part (27) having a first end portion and a second end portion, and enclosing the spring (25) between the first end portion and the second end portion; and a second part (29) telescopically arranged in relation to the first part (27), the second part (29) having a first end portion and a second end portion, and being configured to compress the spring (25) enclosed by the first part (27) when the second end portion of the second part (29) is pushed towards the first end portion of the first part (27); a first brake pad member (23a) comprising a holder configured to hold the first end portion of the first part (27) of the spring assembly; and a second brake pad (23b) member having a spring pushing surface portion directly opposite the holder of the first brake pad member.

## Description

### TECHNICAL FIELD

The disclosure relates generally to braking. In particular aspects, the disclosure relates to a brake pad kit, a disc brake assembly, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A general concern relating to disc brakes is to try to avoid residual drag between the brake disc and the brake pads. If the brake pads remain in contact with the brake disc after the brake has been released, this results in excessive wear and reduced efficiency.

Various solutions exist for urging the brake discs apart, but there is room for improvement relating to, for example, ease of disassembly and/or assembly when the brake pads are replaced.

### SUMMARY

According to a first aspect of the disclosure, there is provided a brake pad kit for use in a disc brake arrangement of a vehicle for braking a wheel rotating around a rotational axis of the wheel when the vehicle is moving, the brake pad kit comprising: an elongated spring assembly comprising: an elongated spring; an elongated first part having a first end portion and a second end portion, and enclosing the spring between the first end portion and the second end portion; and an elongated second part telescopically arranged in relation to the first part, the second part having a first end portion and a second end portion, and being configured to compress the spring enclosed by the first part when the second end portion of the second part is pushed towards the first end portion of the first part; a first brake pad member having a first brake pad with a braking surface, and a back surface attached to a first backing member, the first backing member having a radially peripheral portion arranged to extend outside the first brake pad in a radial direction in relation to the rotational axis of the wheel when the brake pad kit is in use in the disc brake arrangement, wherein the radially peripheral portion of the first backing member comprises a holder configured to hold the first end portion of the first part of the spring assembly in such a way that the spring assembly extends past the first brake pad in a substantially perpendicular direction in relation to the braking surface of the first brake pad; and a second brake pad member having a second brake pad with a braking surface, and a back surface attached to a second backing member, the second backing member having a radially peripheral portion arranged to extend outside the second brake pad in a radial direction in relation to the rotational axis of the wheel when the brake pad kit is in use in the disc brake arrangement, wherein the radially peripheral portion of the second backing member has a spring pushing surface portion directly opposite the holder comprised in the radially peripheral portion of the first brake pad member to push on the second end portion of the second part of the spring assembly, when the brake pad kit is in use in the disc brake arrangement. The first aspect of the disclosure may seek to provide an improved solution for avoiding residual drag between the brake disc and the brake pads in a disc brake arrangement. A technical benefit may include to facilitate disassembly and/or assembly when the brake pads are replaced.

Optionally in some examples, including in at least one preferred example, the elongated spring of the spring assembly may be a compression coil spring. A technical benefit may include to provide a compact elastic member that makes the elongated spring assembly relatively easy to install. Furthermore, a compression coil spring provides for a favorable combination of a long stroke and a strong expanding force.

Optionally in some examples, including in at least one preferred example, the first part of the spring assembly may have a tubular portion between the first end portion and the second end portion, the tubular portion enclosing the spring of the spring assembly. A technical benefit may include that the spring is protected from dirt, so that its functionality can be maintained over time. The tubular portion may, for example, be cylindrical.

Optionally in some examples, including in at least one preferred example, the first end portion of the first part of the spring assembly may have an elastic snap lock configuration; and the holder of the first brake pad member may be configured to interact with the first end portion of the first part of the spring assembly to first compress the first end portion when the first end portion is moved in relation to the holder, and then allow the first end portion to expand when the first end portion has been moved to a holding position where the first end portion of the first part of the spring assembly is held by the holder in such a way that the spring assembly extends past the first brake pad in a substantially perpendicular direction in relation to the braking surface of the first brake pad. A technical benefit may include that the snap lock configuration even further facilitates disassembly and/or assembly when the brake pads are replaced. The snap lock configuration of the first end portion of the first part may be a male snap lock configuration, for interacting with a female holder configuration, or a female snap lock configuration, for interacting with a male holder configuration. Possible alternatives to a snap lock configuration may include, for example, a press fit connection between the first end portion and the holder, or a threaded connection between the first end portion and the holder.

Optionally in some examples, including in at least one preferred example, the holder of the first brake pad member may be configured to interact with the first end portion of the first part of the spring assembly to first compress the first end portion when the first end portion is moved in relation to the holder in a direction parallel to the braking surface of the first brake pad, and then allow the first end portion to expand when the first end portion has been moved to the holding position. A technical benefit may include that the spring assembly may become easier to install after having installed the first and second brake pad members in the brake assembly in the vehicle. The space may be severely limited, and access from the radial periphery of the first brake pad member may greatly facilitate installation of the spring assembly.

Optionally in some examples, including in at least one preferred example, the first end portion of the first part of the spring assembly may have a male type elastic snap lock configuration; and the holder of the first brake pad member may have a female type configuration for receiving the first end portion of the first part of the spring assembly inside the holder. A technical benefit may include that it may be easier to manufacture the first backing member of the first brake pad member with a female type configuration than with a male type configuration.

Optionally in some examples, including in at least one preferred example, the first end portion of the first part of the spring assembly may have a base surface perpendicular to a longitudinal extension of the spring assembly, and an elastic member between a first end of the first part and the base surface. A technical benefit may include that the base surface may interact with a corresponding surface of the first backing member of the first brake pad member to securely hold the spring assembly in such a way that it extends substantially perpendicularly to the braking surface of the first brake pad.

Optionally in some examples, including in at least one preferred example, second part of the spring assembly may be substantially cylindrical.

Optionally in some examples, including in at least one preferred example, the second part of the spring assembly may be telescopically arranged inside the first part of the spring assembly, with the first end portion of the second part being arranged inside the first part and the second end portion of the second part extending outside the first part through the second end portion of the first part. A technical benefit may include that the spring arrangement may be maintained in a straight configuration during compression and expansion of the spring, which may provide for improved reliability.

Optionally in some examples, including in at least one preferred example, the second end portion of the first part of the spring assembly, and the first end portion of the second part of the spring assembly may be configured to prevent the spring from pushing the first end portion of the second part past the second end portion of the first part. A technical benefit may include that the spring arrangement may be easier to install.

Optionally in some examples, including in at least one preferred example, one of the second end portion of the first part of the spring assembly and the first end portion of the second part of the spring assembly may have a lateral protrusion; and the other one of the second end portion of the first part of the spring assembly and the first end portion of the second part of the spring assembly may be configured to interact with the lateral protrusion to prevent the spring from pushing the first end portion of the second part past the second end portion of the first part.

Optionally in some examples, including in at least one preferred example, the second end portion of the second part of the spring assembly may have an end surface with a non-flat surface topography; and the spring pushing surface portion of the second brake pad member may have a surface topography that is substantially complementary to the non-flat surface topography of the end surface of the second end portion of the second part. A technical benefit may include that the spring arrangement may be easier to install. An operator installing the spring arrangement may, for example, first push the second end portion of the second part and the spring pushing surface portion together, and then proceed to engage the first end portion of the first part with the holder.

Optionally in some examples, including in at least one preferred example, the end surface of the second end portion of the second part of the spring assembly may be convex and rounded; and the spring pushing surface portion of the second brake pad member may be concave. A technical benefit may include that it may be easier to manufacture the second backing member of the second brake pad member with a concave spring pushing surface portion than with a convex spring pushing surface portion.

Optionally in some examples, including in at least one preferred example, the brake pad kit may comprise a first spring assembly and a second spring assembly; the radially peripheral portion of the first backing member may comprise a first holder configured to hold the first end portion of the first part of the first spring assembly, and a first spring pushing surface portion; and the radially peripheral portion of the second backing member may have a second spring pushing surface portion directly opposite the first holder comprised in the radially peripheral portion of the first brake pad member, and a second holder configured to hold the first end portion of the first part of the second spring assembly directly opposite the first spring pushing surface portion comprised in the radially peripheral portion of the first brake pad member, when the brake pad kit is in use in the disc brake arrangement. A technical benefit may include to provide for more uniform pushing apart of the first and second brake pad members, when they have been installed in the brake arrangement. Furthermore, this configuration allows for the use of a first brake pad member and a second brake pad member that may have identical specifications, which provides for simplified quality control and reduced costs. The first holder and the first spring pushing surface portion (and consequently the second holder and the second spring pushing surface portion) may be spaced apart in a rotational direction of the brake disc, when installed in the brake arrangement.

Optionally in some examples, including in at least one preferred example, the brake pad kit of the disclosure may be comprised in a disc brake arrangement for a vehicle, further comprising a brake disc; a brake pad holder configured to hold the first brake pad member of the brake pad kit on a first side of the brake disc, and hold the second brake pad member of the brake pad kit on a second side of the brake disc; and an actuator controllable to move the first brake pad member and the second brake pad member towards the brake disc, such that the braking surfaces of the first and second brake pad members interact with the brake disc, wherein: the first end portion of the first part of the spring assembly is held by the holder of the radially peripheral portion of the first backing member of the first brake pad member in such a way that the spring assembly extends past the first brake pad in a substantially perpendicular direction in relation to the braking surface of the first brake pad; and the spring pushing surface portion of the radially peripheral portion of the second backing member of the second brake pad member is arranged to push on the second end portion of the second part of the spring assembly, when the actuator moves the first brake pad member and the second brake pad member towards the brake disc.

Optionally in some examples, including in at least one preferred example, the disc brake arrangement may be comprised in a vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary disc brake arrangement according to an example.
**FIG. 3** is an exemplary brake pad kit according to an example.
**FIG. 4A-4C** are views of an exemplary brake pad kit according to an example.
**FIG. 5** is a partial view of an exemplary brake pad kit according to an example.
**FIG. 6** is an exemplary brake pad kit according to an example.

### DETAILED DESCRIPTION

The detailed description set forth below provides information and examples of the disclosed technology with sufficient detail to enable those skilled in the art to practice the disclosure.

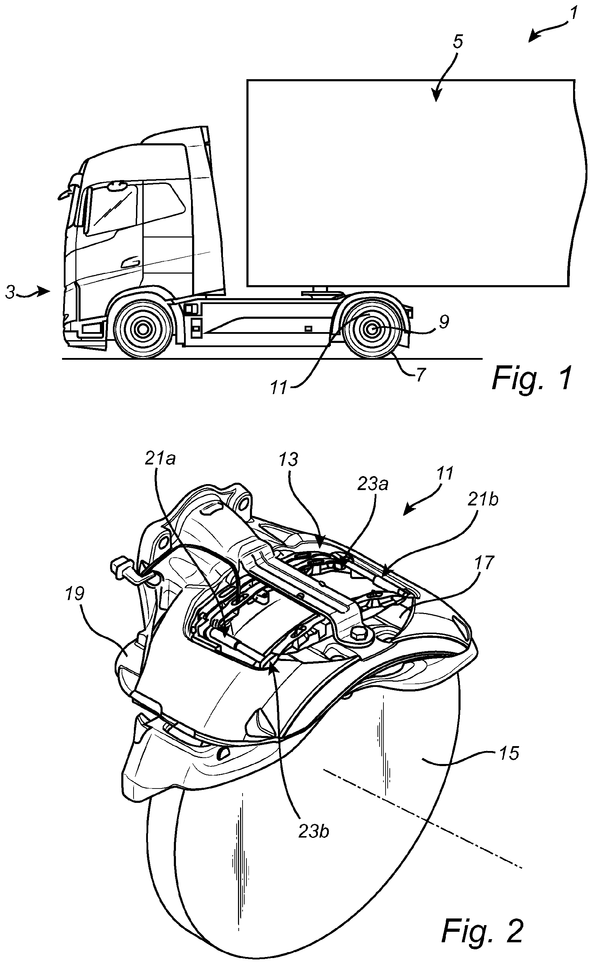

Fig. 1 is an exemplary vehicle 1 according to an example. In this particular example, the vehicle 1 is shown as a vehicle combination including a tractor 3 and a semitrailer 5. Referring to Fig. 1, the vehicle 1 further comprises at least one wheel 7, arranged to rotate around a rotational axis 9, and a disc brake arrangement 11 for braking the wheel 7.

Fig. 2 is a perspective view of an exemplary disc brake arrangement 11 according to an example. As is indicated in Fig. 2, the disc brake arrangement 11 comprises a brake pad kit 13, a brake disc 15, a brake pad holder 17, and an actuator 19. In this particular example, the brake pad kit 13, which is here shown being installed in the disc brake arrangement 11, comprises an elongated first spring assembly 21a, an elongated second spring assembly 21b, a first brake pad member 23a, and a second brake pad member 23b. This configuration of the brake pad kit 13, with two angularly spaced apart spring assemblies 21a-b may be beneficial for the reliability of the drag reducing functionality of the brake pad kit 13, as well as for the quite space constrained assembly/disassembly of the brake pad kit 13 at the disc brake arrangement 11.

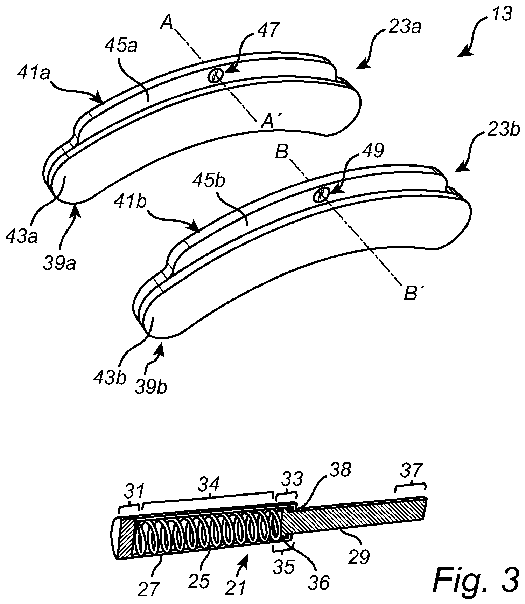

Fig. 3 is an exemplary brake pad kit 13 according to an example. The brake pad kit 13 comprises an elongated spring assembly 21, a first brake pad member 23a, and a second brake pad member 23b. The elongated spring assembly 21 comprises an elongated spring 25, an elongated first part 27, and an elongated second part 29.

The elongated first part 27 has a first end portion 31 and a second end portion 33, and encloses the spring 25 between the first end portion 31 and the second end portion 33. In Fig. 3, the first part 27 is illustrated as being partly open to show the arrangement of the spring 25. Here, the spring 25 is provided in the form of a compression coil spring. It should, however, be noted that the elongated spring 25 need not necessarily be a coil spring, but could be provided in the form of another kind of elastic member. In Fig. 3, furthermore, the first part 27 of the spring assembly 21 is shown to have a tubular portion 34 between the first end portion 31 and the second end portion 33, where the tubular portion 34 encloses the spring 25. The tubular portion 34 is here shown as being circularly cylindrical. This particular cross-section of the tubular portion 34 is, however, not essential, but the cross-section could have another geometrical shape, such as polygonal. Furthermore, although it may be beneficial for reliability and to protect the spring 25, it is not necessary for the spring to be completely enclosed by a tubular portion 34 as shown in Fig. 3. As an alternative, the first part 27 may have an open grid or net structure for enclosing the spring 25.

As is schematically indicated in Fig. 3, the elongated second part 29 is telescopically arranged in relation to the first part 27. The elongated second part 29 has first end portion 35 and a second end portion 37, and is configured to compress the spring 25 enclosed by the first part 27 when the second end portion 37 of the second part 29 is pushed towards the first end portion 31 of the first part 27. In Fig. 3, the second part 29 is shown as being telescopically arranged inside the first part 27 of the spring assembly 21, with the first end portion 35 of the second part 29 being arranged inside the first part 27 and the second end portion 37 of the second part 29 extending outside the first part 27 through the second end portion 33 of the first part 27. It should be noted that the second part 29 may alternatively be telescopically arranged outside the first part 27.

In the example configuration shown in Fig. 3, the second end portion 33 of the first part 27 of the spring assembly 21, and the first end portion 35 of the second part 29 of the spring assembly 21 are configured to prevent the spring 25 from pushing the first end portion 35 of the second part 29 past the second end portion 33 of the first part 27. In the example configuration of Fig. 3, this functionality is provided by a lateral protrusion 36 at the first end portion 35 of the second part 29 and a circumferential lip 38 at the second end 33 of the first part 27.

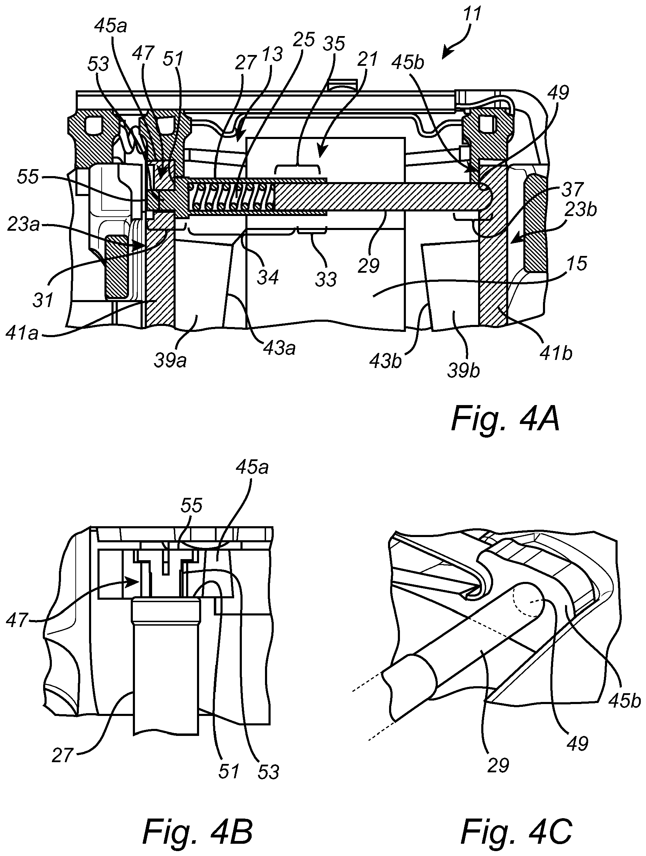

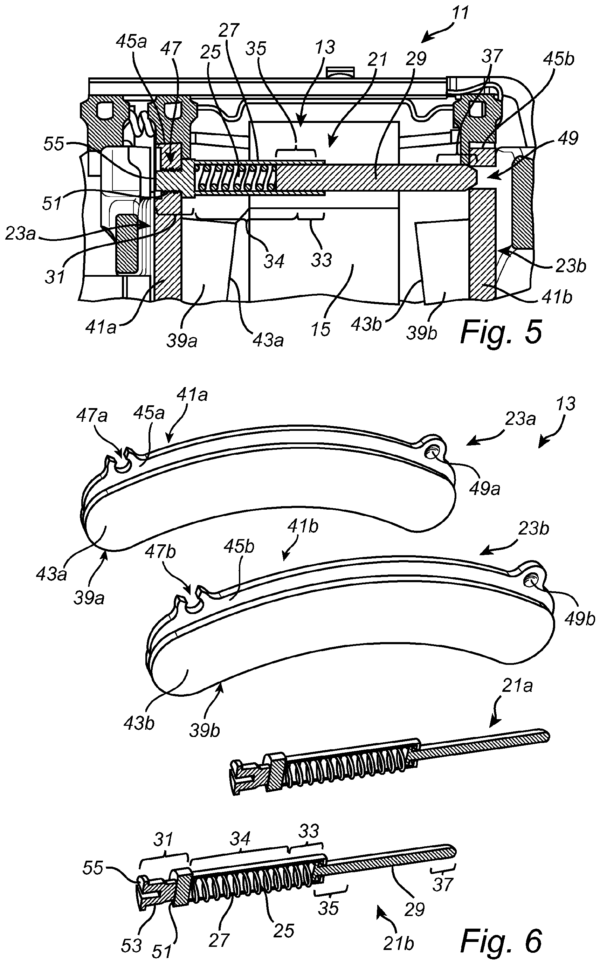

The first brake pad member 23a has a first brake pad 39a and a first backing member 41a. The first brake pad 39a has a braking surface 43a, and a back surface attached to the first backing member 41a. The first backing member 41a has a radially peripheral portion 45a arranged to extend outside the first brake pad 39a in a radial direction in relation to the rotational axis 9 of the wheel 7 when the brake pad kit 13 is in use in the disc brake arrangement 11. The radially peripheral portion 45a of the first backing member 41a comprises a holder 47 configured to hold the first end portion of the first part 27 of the spring assembly 21 in such a way that the spring assembly 21 extends past the first brake pad 39a in a substantially perpendicular direction in relation to the braking surface 43a of the first brake pad 39a. In Fig. 3, the holder is only schematically indicated by a circular surface. This signifies the functional nature of the holder 47, which is substantially defined by the configuration of the first end portion 31 of the first part 27 of the spring assembly 21, and vice-versa. The holding action provided by the holder 47 or together by the first end portion 31 and the holder 47 can be provided in various ways. Examples of snap lock holding and screw holding are shown in Fig. 4A and Fig. 5, and will be discussed further below. Alternatively, the holding action may be provided by press fit, or by any other suitable holding action principle, or by a combination of different ways of holding two parts together.

The second brake pad member 23b has a second brake pad 39b and a second backing member 41b. The second brake pad 39a has a braking surface 43b, and a back surface attached to the second backing member 41b. The second backing member 41b has a radially peripheral portion 45b arranged to extend outside the second brake pad 39b in a radial direction in relation to the rotational axis 9 of the wheel 7 when the brake pad kit 13 is in use in the disc brake arrangement 11. The radially peripheral portion 45b of the second backing member 41b comprises a spring pushing surface portion 49 directly opposite the holder 47 comprised in the radially peripheral portion of the first brake pad member 23a to push on the second end portion 37 of the second part 29 of the spring assembly 21, when the brake pad kit 13 is in use in the disc brake arrangement 11. In Fig. 3, the spring pushing surface portion 49 is only schematically indicated by a circular surface. This signifies the functional nature of the spring pushing surface portion 49. The spring pushing surface portion 49 may have different configurations, at least partly depending on the configuration of the second end portion 37 of the second part 29 of the spring assembly 21. In its simplest configuration, however, the spring pushing surface portion 49 may simply be a substantially flat portion of the surface of the radially peripheral portion of the second backing member 41b.

Fig. 4A-4C are views of an exemplary brake pad kit 13 according to an example, shown when in use in a disc brake arrangement 11. Fig. 4A is a cross-section view from the side through the spring arrangement 21, the holder 47 of the first brake pad member 23a, and the spring pushing surface portion 49 of the second brake pad member 23b. In this particular example configuration of the brake pad kit 13, the first end portion 31 of the first part 27 of the spring assembly 21 has an elastic snap lock configuration. As is indicated in Fig. 4A, the first end portion 31 of the first part 27 of the spring assembly 21 has a base surface 51 perpendicular to the longitudinal extension of the spring assembly 21, and an elastic member 53 between a first end 55 of the first part 27 and the base surface 51. As is also indicated in Fig. 4A, the second end portion 37 of the second part 29 of the spring assembly 21 has an end surface with a non-flat surface topography; and the spring pushing surface portion 49 of the second brake pad member 23b has a surface topography that is substantially complementary to the non-flat surface topography of the end surface of the second end portion 37 of the second part 29.

As is perhaps better seen in Fig. 4B, which is a top view of the interaction between the first end portion 31 of the first part 27 of the spring assembly 21, the radially peripheral portion 45a of the first backing member 41a of the first brake pad member 23a is radially open to allow insertion of the elastic member 53 in the first end portion 31 of the first part 27 from the top of the disc brake arrangement 11, when the first 23a and second 23b brake pad members have been attached to the brake pad holder 17 (see Fig. 2). This may facilitate installation of the elongated spring assembly, following attachment of the first 23a and second 23b brake pad members to the brake pad holder 17.

Fig. 4C is a perspective illustration of an exemplary interaction between the second end portion 37 of the second part 29 of the spring assembly 21 and the spring pushing surface portion 49 of the second brake pad member 23b. In this exemplary configuration, the end portion 37 of the second part 29 is convex, in this case substantially spherical, and the spring pushing surface portion 49 of the second brake pad member 23b is concave, in this case substantially spherical. For illustrative purposes, the second part 29 of the spring assembly has been made partly transparent.

Fig. 5 is a partial view of an exemplary brake pad kit 13 according to an example. Like Fig. 4A, Fig. 5 is a cross-section view from the side through the spring arrangement 21, the holder 47 of the first brake pad member 23a, and the spring pushing surface portion 49 of the second brake pad member 23b. In this particular example configuration of the brake pad kit 13, the first end portion 31 of the first part 27 of the spring assembly 21 is threaded, to allow the spring assembly 41 to be screwed into the first brake pad member 23a. The second end portion 37 of the second part 29 of the spring assembly 21 has an end surface with a non-flat surface topography, in this example configuration the non-flat surface topography is exemplified by frustoconical surface topography. The spring pushing surface portion 49 of the second brake pad member 23b has a surface topography that is substantially complementary to the non-flat surface topography of the end surface of the second end portion 37 of the second part 29, and is here exemplified as a through-going hole that receives the frustoconical second end portion 37 of the second part 29 of the spring assembly 21.

Fig. 6 is an exemplary brake pad kit 13 according to an example, comprising a first spring assembly 21a and a second spring assembly 21b. In this brake pad kit 13, the radially peripheral portion 45a of the first backing member 41a comprises a first holder 47a configured to hold the first end portion 31 of the first part 27 of the first spring assembly 21a, and a first spring pushing surface portion 49a. The radially peripheral portion 45b of the second backing member 41b has a second spring pushing surface 49b portion directly opposite the first holder 47a comprised in the radially peripheral portion 45a of the first brake pad member 23a, and a second holder 47b configured to hold the first end portion 31 of the first part 27 of the second spring assembly 21b directly opposite the first spring pushing surface portion 49a comprised in the radially peripheral portion 45a of the first brake pad member 23a, when the brake pad kit 13 is in use in the disc brake arrangement 11.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A brake pad kit (13) for use in a disc brake arrangement (11) of a vehicle (1) for braking a wheel (7) rotating around a rotational axis (9) of the wheel (7) when the vehicle (1) is moving, the brake pad kit (13) comprising:
an elongated spring assembly (21) comprising:
an elongated spring (25);
an elongated first part (27) having a first end portion (31) and a second end portion (33), and enclosing the spring between the first end portion (31) and the second end portion (33); and
an elongated second part (29) telescopically arranged in relation to the first part (27), the second part (29) having a first end portion (35) and a second end portion (37), and being configured to compress the spring (25) enclosed by the first part (27) when the second end portion (37) of the second part (29) is pushed towards the first end portion (31) of the first part (27);
a first brake pad member (23a) having a first brake pad (39a) with a braking surface (43a), and a back surface attached to a first backing member (41a), the first backing member (41a) having a radially peripheral portion (45a) arranged to extend outside the first brake pad (39a) in a radial direction in relation to the rotational axis (9) of the wheel (7) when the brake pad kit (13) is in use in the disc brake arrangement (11), wherein the radially peripheral portion (45a) of the first backing member (41a) comprises a holder (47) configured to hold the first end portion (31) of the first part (27) of the spring assembly (21) in such a way that the spring assembly (21) extends past the first brake pad (39a) in a substantially perpendicular direction in relation to the braking surface (43a) of the first brake pad (39a); and
a second brake pad member (23b) having a second brake pad (39b) with a braking surface (43b), and a back surface attached to a second backing member (41b), the second backing member (41b) having a radially peripheral portion (45b) arranged to extend outside the second brake pad (39b) in a radial direction in relation to the rotational axis (9) of the wheel (7) when the brake pad kit (13) is in use in the disc brake arrangement (11), wherein the radially peripheral portion (45b) of the second backing member (41b) has a spring pushing surface portion (49) directly opposite the holder (47) comprised in the radially peripheral portion of the first brake pad member (23a) to push on the second end portion (37) of the second part (29) of the spring assembly (21), when the brake pad kit (13) is in use in the disc brake arrangement (11).

2. The brake pad kit (13) of claim 1, wherein the elongated spring (25) of the spring assembly (21) is a compression coil spring.

3. The brake pad kit (13) of claim 1 or 2, wherein the first part (27) of the spring assembly (21) has a tubular portion (34) between the first end portion (31) and the second end portion (33), the tubular portion (34) enclosing the spring (25) of the spring assembly (21).

4. The brake pad kit (13) of any one of claims 1-3, wherein:
the first end portion (31) of the first part (27) of the spring assembly (21) has an elastic snap lock configuration; and
the holder (47) of the first brake pad member (23a) is configured to interact with the first end portion (31) of the first part (27) of the spring assembly (21) to first compress the first end portion (31) when the first end portion (31) is moved in relation to the holder (47), and then allow the first end portion (31) to expand when the first end portion (31) has been moved to a holding position where the first end portion (31) of the first part (27) of the spring assembly (21) is held by the holder (47) in such a way that the spring assembly (21) extends past the first brake pad (39a) in a substantially perpendicular direction in relation to the braking surface (43a) of the first brake pad (39a).

5. The brake pad kit (13) of claim 4, wherein the holder (47) of the first brake pad member (23a) is configured to interact with the first end portion (31) of the first part (27) of the spring assembly (21) to first compress the first end portion (31) when the first end portion (31) is moved in relation to the holder (47) in a direction parallel to the braking surface of the first brake pad, and then allow the first end portion (31) to expand when the first end portion (31) has been moved to the holding position.

6. The brake pad kit (13) of claim 4 or 5, wherein:
the first end portion (31) of the first part (27) of the spring assembly (21) has a male type elastic snap lock configuration; and
the holder (47) of the first brake pad member (23a) has a female type configuration for receiving the first end portion (31) of the first part (27) of the spring assembly (21) inside the holder (47).

7. The brake pad kit (13) of any one of claims 4-6, wherein the first end portion (31) of the first part (27) of the spring assembly (21) has a base surface (51) perpendicular to a longitudinal extension of the spring assembly (21), and an elastic member (53) between a first end (55) of the first part (27) and the base surface (51).

8. The brake pad kit (13) of any one of claims 1-7, wherein the second part (29) of the spring assembly (21) is telescopically arranged inside the first part (27) of the spring assembly (21), with the first end portion (35) of the second part (29) being arranged inside the first part (27) and the second end portion (37) of the second part (29) extending outside the first part (27) through the second end portion (33) of the first part (27).

9. The brake pad kit (13) of any one of claims 1-8, wherein the second end portion (33) of the first part (27) of the spring assembly (21), and the first end portion (35) of the second part (29) of the spring assembly (21) are configured to prevent the spring (25) from pushing the first end portion (35) of the second part (29) past the second end portion (33) of the first part (27).

10. The brake pad kit (13) of claim 9, wherein:
one of the second end portion (33) of the first part (27) of the spring assembly (21) and the first end portion (35) of the second part (29) of the spring assembly (21) has a lateral protrusion (34); and
the other one of the second end portion (33) of the first part (27) of the spring assembly (21) and the first end portion (35) of the second part (29) of the spring assembly (21) is configured to interact with the lateral protrusion (34) to prevent the spring (25) from pushing the first end portion (35) of the second part (29) past the second end portion (33) of the first part (27).

11. The brake pad kit (13) of any one of claims 1-10, wherein:
the second end portion (37) of the second part (29) of the spring assembly (21) has an end surface with a non-flat surface topography; and
the spring pushing surface portion (49) of the second brake pad member (23b) has a surface topography that is substantially complementary to the non-flat surface topography of the end surface of the second end portion (37) of the second part (29).

12. The brake pad kit (13) of claim 11, wherein:
the end surface of the second end portion (37) of the second part (29) of the spring assembly (21) is convex and rounded; and
the spring pushing surface portion (49) of the second brake pad member (23b) is concave.

13. The brake pad kit (13) of any one of claims 1-12, wherein:
the brake pad kit (13) comprises a first spring assembly (21a) and a second spring assembly (21b);
the radially peripheral portion (45a) of the first backing member (41a) comprises a first holder (47a) configured to hold the first end portion (31) of the first part (27) of the first spring assembly (21a), and a first spring pushing surface portion (49a); and
the radially peripheral portion (45b) of the second backing member (41b) has a second spring pushing surface portion (49b) directly opposite the first holder (47a) comprised in the radially peripheral portion (45a) of the first brake pad member (23a), and a second holder (47b) configured to hold the first end portion (31) of the first part (27) of the second spring assembly (21a) directly opposite the first spring pushing surface portion (49a) comprised in the radially peripheral portion (45a) of the first brake pad member (23a), when the brake pad kit (13) is in use in the disc brake arrangement (11).

14. A disc brake arrangement (11) for a vehicle (1), comprising:
the brake pad kit (13) of any one of claims 1-13;
a brake disc (15);
a brake pad holder (17) configured to hold the first brake pad member (23a) of the brake pad kit (13) on a first side of the brake disc (15), and hold the second brake pad member (23b) of the brake pad kit (13) on a second side of the brake disc (15); and
an actuator (19) controllable to move the first brake pad member (23a) and the second brake pad member (23b) towards the brake disc (15), such that the braking surfaces (43a-b) of the first and second brake pad members (23a-b) interact with the brake disc (15),
wherein:
the first end portion (31) of the first part (27) of the spring assembly (21) is held by the holder (47) of the radially peripheral portion (45a) of the first backing member (41a) of the first brake pad member (23a) in such a way that the spring assembly (21) extends past the first brake pad (39a) in a substantially perpendicular direction in relation to the braking surface (43a) of the first brake pad (39a); and
the spring pushing surface portion (49) of the radially peripheral portion (45b) of the second backing member (41b) of the second brake pad member (23b) is arranged to push on the second end portion (37) of the second part (29) of the spring assembly (21), when the actuator (19) moves the first brake pad member (23a) and the second brake pad member (23b) towards the brake disc (15).

15. A vehicle (1) comprising the disc brake arrangement (11) of claim 14.
